# EUROPÄISCHE PATENTSCHRIFT

(11) **EP 3 712 647 B1**
(45) Veröffentlichungstag und Bekanntmachung des Hinweises auf die Patenterteilung: **28.04.2021**
(21) Anmeldenummer: 19163505.1
(22) Anmeldetag: 18.03.2019
(51) Int. Cl.: G01S 7/484, G01S 7/486

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(43) Veröffentlichungstag der Anmeldung: 23.09.2020
(73) Patentinhaber: SICK AG, 79183 Waldkirch (DE)
(72) Erfinder: Marra, Martin, 79280 Au (DE); Gimpel, Dr. Hartmut, 79194 Gundelfingen (DE)

(56) Entgegenhaltungen:
- EP-A1- 2 469 296
- EP-A1- 3 454 086
- DE-A1-102015 121 839
- DE-B3-102016 120 389
- US-A1- 2017 176 579

## Beschreibung

Die Erfindung betrifft einen optoelektronischen Sensor, insbesondere einen Laserscanner, und ein Verfahren zur Erfassung von Objekten in einem Überwachungsbereich nach dem Oberbegriff von Anspruch 1 beziehungsweise 15.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. In den meisten Laserscannern wird die Abtastbewegung durch einen Drehspiegel oder ein Polygonspiegelrad erreicht. Stattdessen rotiert in einigen Laserscannern wie etwa demjenigen nach DE 197 57 849 B4 der gesamten Messkopf mit Lichtsendern und Lichtempfängern.

Laserscanner werden auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Um bei beschränkter Lichtpulsenergie die Reichweite zu steigern, senden einige herkömmliche Laserscanner je Abstandswert mehrere Lichtpulse aus und verrechnen die Ergebnisse dieser Einzelmessungen zu einem gemeinsamen Messwert. Ein derartiger Laserscanner mit Pulsmittelungsverfahren ist beispielsweise aus der DE 10 2010 061 382 A1 bekannt. Die mehreren Lichtpulse treffen durch die zwischenzeitliche Rotation des Drehspiegels jeweils versetzt im Messbereich auf. Der Messwert ist daher über mehrere seitlich benachbarte Abtastpositionen gemittelt und verschmiert. Gerade bei Kantentreffern unterscheiden sich die Beiträge der Einzelpulse erheblich, und deshalb kommt es hier oft zu fehlenden oder sogar falschen Messwerten. Das ist besonders unvorteilhaft, weil gerade die Kanten eine besonders wichtige Messinformation darstellen.

Während die meisten bekannten Laserscanner mit einem einzigen Abtaststrahl arbeiten und dementsprechend nur eine zentrale Abtastebene erfassen, gibt es auch Bestrebungen, durch eine Vielzahl von Abtaststrahlen einen Mehrebenenscanner zu realisieren. Das kann dann auch mit einem Pulsmittelungsverfahren kombiniert werden.

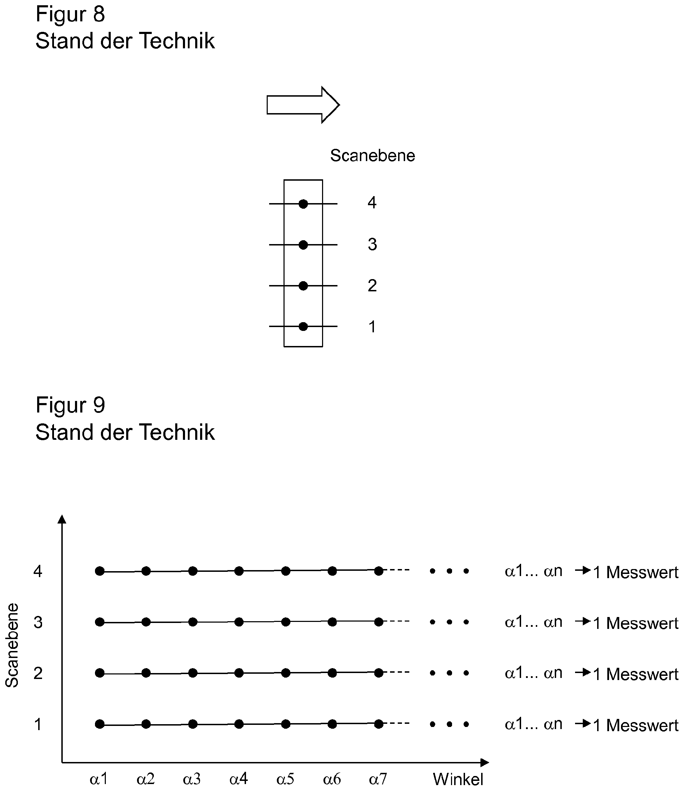

Das Arbeitsprinzip eines solchen Laserscanners ist in den Figuren 8 und 9 illustriert. Figur 8 zeigt eine Draufsicht auf eine Spalte mit vier übereinander angeordneten Lichtsendern. Die Darstellung kann ebenso als Schnitt durch die davon erzeugten Abtaststrahlen aufgefasst werden. Während der durch einen Pfeil angedeuteten Rotationsbewegung wird mit jedem Abtaststrahl eine Abtastebene oder Scanebene erfasst.

Figur 9 zeigt, wie im Laufe der Rotation Messwerte entstehen. Jeder Lichtsender sendet mit einer Messwiederholfrequenz Einzelpulse aus. In der Zeit zwischen zwei Einzelpulsen dreht sich der Laserscanner um einen Winkel weiter, und diese Winkel sind in Figur 9 auf der X-Achse aufgetragen. Nach n Einzelpulsen werden die damit in den Winkeln α1...αn durchgeführten Einzelmessungen zu einem gemeinsamen Messwert für den Abstand zusammengefasst. Der Messwert ist folglich ein Mittelwert für den Winkelbereich zwischen α1 und αn. Die Messung erfolgt in allen Scanebenen in gleicher Weise, hier beispielhaft vier Scanebenen entsprechend den vier Abtaststrahlen.

Es gibt dabei eine klare, direkte Zuordnung zwischen Abtaststrahl und Messwert. Ein bestimmter Abtaststrahl und damit das Paar aus Lichtsender und Lichtempfänger, das diesen Abtaststrahl aussendet und empfängt, ist einer bestimmten Messebene zugeordnet und erzeugt darin aus Gruppen aufeinanderfolgender Einzelmessungen jeweils einen Messwert.

Auch in einem Mehrebenenscanner ergeben sich somit die beschriebenen Nachteile eines Pulsmittelungsverfahrens. Jeder Messwert mittelt aufgrund der Weiterbewegung über Abstandswerte, die womöglich von ganz unterschiedlichen Objekten stammen. Bei großen Objekten ist die Abstandsvarianz innerhalb der Einzelmessungen in aller Regel gering und die Mittelung unproblematisch. Für kleine oder besonders unregelmäßige Objekte, bei denen häufig Kanten erfasst werden, verschlechtern sich jedoch die Messwerte bis hin zum Extremfall unbrauchbarer Messwerte.

Es gibt im Stand der Technik verschiedene Vorschläge für Laserscanner mit mehreren Abtaststrahlen. Meist verwenden sie ein Einzelpuls- oder Phasenverfahren und haben daher keinen Bezug zu den geschilderten Problemen eines Pulsmittelungsverfahrens.

In der US 2010/0020306 A1 beispielsweise ist für jede Abtastebene ein eigener Lichtsender und Lichtempfänger vorgesehen, womit die Möglichkeit besteht, jede einzelne Abtastebene wie gewünscht einzujustieren. Ein Mittelungsverfahren ist nicht angesprochen, aber wegen der deutlichen Zuordnung zwischen Lichtsender-Lichtempfängerpaar, Abtaststrahl und Abtastebene würde jedenfalls eine Mittelung auch hier nur über einen Winkelbereich verschmierte Messwerte erfassen.

In der EP 2 863 176 A2 wird eine rotierende Plattform offenbart, auf der verschiedene Erfassungsmodule rotieren können. In einer Ausführungsform werden zwei in Drehrichtung um 180° versetzte Abtaststrahlen erzeugt, um damit eine zweikanalige, redundante Messwerterfassung zu erreichen. Damit verbietet es sich, die Zuordnung zwischen Abtaststrahl und Messwert in Frage zu stellen. Wiederum ist kein Pulsmittelungsverfahren erwähnt.

Die DE 10 2004 014 041 A1 befasst sich mit einem Sensorsystem zur Hinderniserkennung nach Art eines Laserscanners, das eine Laserzeile und eine Reihe von Fotodioden verwendet. Diese Anordnungen stehen aufrecht bezüglich der Abtastebenen, so dass die Situation prinzipiell der Figur 8 entspricht. In einer Ausführungsform sind drei Abtastsysteme um jeweils 120° in Drehrichtung gegeneinander versetzt angeordnet, deren Elevationswinkel durch einen Hubmotor variiert werden kann. Damit werden die von jeweiligen Abtastsystemen erfassten Sichtbereiche so eingestellt, dass sie gemeinsam einen möglichst großen, zusammenhängenden Elevationswinkelbereich abdecken. Das entspricht dann effektiv einer Verlängerung der Spalte, trägt aber nicht dazu bei, die Nachteile eines Mittelungsverfahrens zu überwinden, das auch nicht erwähnt ist.

In der DE 10 2015 121 839 A1 wird ein Mehrebenenscanner beschrieben, der sendeseitig eine gemeinsame Sendeoptik zum Verändern der Strahlform und/oder der Strahlrichtung nutzt. In einer Ausführungsform bilden die Sendelichtstrahlen im Querschnitt ein zweidimensionales Muster, in dem aber die Zuordnung von Abtaststrahl und Messwert eineindeutig bleibt, zudem ohne Mittelung über Einzelmessungen.

Die DE 10 2017 107 666 A1 nutzt benachbarte Abtaststrahlen eines Mehrebenenscanners für eine Nahbereichserweiterung. Dazu wird ein übersprechender Querschnittsanteil des Abtaststrahls zusätzlich mit einem benachbarten Lichtempfänger ausgewertet, aber dies innerhalb derselben Einzelmessung, die ohne Mittelung in einem Abstandswert resultiert.

Aus der US 2018/0259645 A1 ist ein LIDAR-System (Light Detection and Ranging) mit einer VCSEL-Matrix (Vertical Cavity Surface-Emitting Laser) als Lichtsender und einer SPAD-Matrix (Single-Photon Avalanche Diode) als Lichtempfänger bekannt. Es gibt eine 1:1-Zuordnung von Lichtsenderelement und Lichtempfangselement, um jeweils einen Abtaststrahl zu bilden. In einer scannenden Ausführungsform mit Mittelung über mehrere Pulse ergibt sich dann zwangsläufig die unerwünschte Ortsunschärfe, die aber in US 2018/0259645 A1 nicht diskutiert wird.

Die EP 3 454 086 A1 offenbart einen optoelektronischen Sensor zur Positionserfassung eines Objekts, der mit einer gepulsten Flächenbeleuchtung und einem SPAD-Array Entfernungen misst. Mehrere Entfernungsbestimmungseinheiten können variabel mit SPADs verbunden werden, um auf diese Weise die Kontur des Objekts in mehreren interessierenden Bereichen zu vermessen und mit einer der Zielposition entsprechenden Referenzkontur zu vergleichen.

In der nachveröffentlichten DE 10 2018 101 846 A1 bilden die Abtaststrahlen eine Kreisanordnung. Dabei bleiben Messwerte und Abtaststrahlen einander eindeutig zugeordnet, und eine Mittelung ist auch nicht erwähnt.

Die ebenfalls nachveröffentlichte DE 10 2018 101 847 A1 befasst sich mit verschiedensten Anordnungen der Abtaststrahlen, die durch Drehen und Kippen von Mehrstrahlmodulen erreicht werden. Darunter gibt es auch Konfigurationen, in denen dieselbe Abtastebene mehrfach von nebeneinanderliegenden Abtaststrahlen erfasst wird. Diese Redundanz dient aber nicht dazu, die Ortsunschärfe gemittelter Messwerte zu verringern.

Es ist daher Aufgabe der Erfindung, die Messgenauigkeit eines gattungsgemäßen Sensors zu verbessern.

Diese Aufgabe wird durch einen optoelektronischen Sensor, insbesondere Laserscanner, und ein Verfahren zur Erfassung von Objekten in einem Überwachungsbereich nach Anspruch 1 beziehungsweise 15 gelöst. Der Sensor weist mindestens einen Lichtsender und einen Lichtempfänger auf, mit dem Sendelicht ausgesandt und wieder empfangen wird. Eine bewegliche Ablenkeinheit lenkt das Sendelicht periodisch ab. Dabei werden sendeseitig und/oder empfangsseitig mehrere Abtaststrahlen erzeugt. Abtaststrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen.

Eine Steuer- und Auswertungseinheit misst mit Hilfe der Abtaststrahlen in einem Lichtlaufzeitverfahren Abstände zu den angetasteten Objektpunkten. Dazu wird mit den jeweiligen Abtaststrahlen eine Vielzahl von Einzelmessungen durchgeführt. Einzelmessung bedeutet, dass Sendelicht mit dem jeweiligen Abtaststrahl ausgesandt und wieder empfangen wird, vorzugsweise ein Lichtpuls. Mehrere dieser Einzelmessungen werden dann zu einem gemeinsamen Messwert für den Abstand zu dem Objekt verrechnet. Insbesondere verwendet die Steuer- und Auswertungseinheit ein Pulsmittelungsverfahren, bei dem mindestens zwei, vorzugsweise eine deutlich größere Vielzahl von Einzelmessungen mit jeweils einem ausgesandten und wieder empfangenen Lichtpulse gemittelt werden, sei es auf Ebene von Empfangssignalen oder von Einzellichtlaufzeiten der Einzelmessungen.

Die Erfindung geht von dem Grundgedanken aus, die Zuordnung zwischen Abtaststrahl und Messwert aufzuheben. Anders als herkömmlich werden nicht einfach die aufeinanderfolgenden Einzelmessungen eines jeden Abtaststrahl zusammengefasst. Vielmehr werden Einzelmessungen miteinander verrechnet, die von unterschiedlichen Abtaststrahlen stammen. Es tragen somit mindestens zwei unterschiedliche Abtaststrahlen mit ihren Einzelmessungen zum selben Messwert bei. Dabei werden vorzugsweise Einzelmessungen von unterschiedlichen Zeitpunkten zusammengefasst. Die Ablenkeinheit hat sich also zwischen den zu einem Messwert beitragenden Einzelmessungen weiterbewegt.

Die Erfindung hat den Vorteil, dass durch die strahlübergreifende Auswertung mit Beiträgen mehrere Abtaststrahlen die durch die Weiterbewegung erzeugte Ortsunschärfe zumindest teilweise kompensiert wird. Die erfindungsgemäß gewonnenen Messwerte sind daher nicht oder jedenfalls nur in stark verringertem Umfang über einen großen Winkelbereich verschmiert. Kantentreffer liefern deutlich verlässlichere Messwerte, somit werden gerade die wichtigen Informationen und auch kleine Objekte genauer erfasst. Die Qualität der Messwerte steigt bei unveränderter Motorfrequenz und optischer Lichtleistung beziehungsweise Gesamtzahl der Einzelmessungen oder ausgesandten Lichtpulse an. Die Verringerung der Wiederholzeit zwischen zwei Messungen wäre eine alternative Maßnahme, die Messgenauigkeit zu verändern, aber das stößt an Grenzen der Verarbeitungsgeschwindigkeit und Belastung der Bauteile, insbesondre sendeseitige Wärmeentwicklung und Lebensdauer, und womöglich auch der Augensicherheit. Außerdem kann eine schnellere Messabfolge den Winkelbereich, über den Messwerte verschmiert sind, lediglich verringern, aber schon konzeptionell nicht ganz verschwinden lassen. Indem die Wärmeentwicklung auf mehrere Lichtquellen verteilt wird, können hiermit auch höhere Lebensdauern der Lichtquellen oder alternativ größere Lichtleistungen und damit Messreichweiten erreicht werden.

Bevorzugt weist der Lichtsender eine Vielzahl von Einzellichtsendern, die jeweils einzeln oder gruppenweise einen Abtaststrahl erzeugen, und/oder der Lichtempfänger eine Vielzahl von Einzellichtempfängern auf, die jeweils einzeln oder gruppenweise das remittierte Sendelicht als einen Abtaststrahl empfangen. Es gibt dann jeweilige Paare von Einzellichtsendern und Einzellichtempfängern, die einen Abtaststrahl erzeugen. Alternativ ist denkbar, sendeseitig oder empfangsseitig ein Flächenelement zu verwenden, die Separation der Abtaststrahlen geschieht dann auf der Gegenseite. Ein Beispiel ist eine sendeseitige Lichtlinie, von der unterschiedliche Abschnitte separat empfangen werden, um die Abtaststrahlen zu bilden. Ein anderes Beispiel ist ein einzelnes, langgestrecktes Empfangselement, auf das separate Abtaststrahlen mehrerer Einzellichtsender fallen. In solchen Fällen ist eine Unterscheidung durch Zeitmultiplexing, Wellenlängen oder Strahlcodierung vorteilhaft.

Die Einzellichtsender und/oder die Einzellichtempfänger bilden vorzugsweise eine Zeilenanordnung oder eine Matrixanordnung. Damit entsteht eine entsprechende Anordnung der Abtaststrahlen, wenn diese in einem Querschnitt senkrecht zu ihrer Ausbreitungsrichtung betrachtet werden. Ein Zeilen- oder Matrixmuster ist besonders geeignet, um Einzelmessungen über verschiedene Abtaststrahlen zu einem Messwert zu kombinieren.

Bevorzugt weisen die Einzellichtsender VCSEL und/oder die Einzellichtempfänger SPADs auf. Dabei können mehrere VCSEL gemeinsam einen Einzellichtsender beziehungsweise mehrere SPADs einen Einzellichtempfänger bilden.

Die Zeilenanordnung oder Matrixanordnung ist bevorzugt bezüglich oder entlang der Bewegungsrichtung der Ablenkeinheit ausgerichtet. Die Richtung der Zeile beziehungsweise der Zeilen einer Matrix stimmt folglich mit der Bewegungsrichtung überein. Bei einer für Laserscanner üblichen Anordnung mit vertikaler Drehachse liegen die Zeilen horizontal. Bei dieser Ausrichtung wird jeder Punkt auf dem Objekt während der Bewegung der Ablenkeinheit mehrfach überstrichen, und das lässt sich für eine besonders vorteilhafte Zusammenfassung von Einzelmessungen nutzen. Es versteht sich, dass im Falle einer Matrix ebenso die Spalten ausgerichtet werden könnten, diese würden dann vereinfachend als Zeilen bezeichnet.

Die Zeilenanordnung oder Matrixanordnung steht alternativ schräg zu der Bewegungsrichtung der Ablenkeinheit. Eine Matrixanordnung lässt sich so orientieren, dass mehrere Rasterpunkte doch wieder eine horizontale Zeile bilden, auch wenn diese Zeile nicht mit den Matrixzeilen übereinstimmt. Aber auch wenn ein Höhenversatz zwischen den Rasterpunkten verbleibt, was bei einer einzelnen schräg stehenden Zeile unvermeidlich und bei einer Matrix für zumindest einige Rasterpunkte der Fall ist, kann der gegenseitige Höhenversatz klein genug sein, dass eine solche Verschmierung der Messwerte noch hingenommen oder sogar angestrebt wird.

Die Abtaststrahlen überstreichen bevorzugt mehrere Abtastebenen. Der Sensor ist in dieser Ausführungsform ein Mehrebenenscanner. Beispielsweise erfasst bei einer zur Bewegungsrichtung der Ablenkeinheit ausgerichteten Matrixanordnung jede Zeile von Abtaststrahlen eine eigene Abtastebene.

Mehrere Abtaststrahlen überstreichen vorzugsweise dieselbe Abtastebene. Das ist beispielsweise der Fall, wenn eine Zeile von Abtaststrahlen in Bewegungsrichtung der Ablenkeinheit ausgerichtet ist. Wie schon ausgeführt, können auch bei einer schräg stehenden Matrix mehrere Rasterelemente auf gleicher Höhe liegen und somit effektiv eine Zeilenanordnung bilden, mit der dieselbe Abtastebene mehrfach erfasst wird. Die beiden Fälle, dass die Abtaststrahlen mehrere Abtastebenen und mehrere Abtaststrahlen dieselbe Abtastebene überstreichen, schließen einander nicht aus. Im Gegenteil ist das bei einer sogar bevorzugten Matrixanordnung von Abtaststrahlen der Fall, wo eine Zeile, oder auch eine effektive Zeilenanordnung von Rasterpunkten bei schräg stehender Matrix, dieselbe Abtastebene mehrfach überstreicht, aber jede Zeile ihre eigene Abtastebene.

Die Steuer- und Auswertungseinheit ist bevorzugt dafür ausgebildet, Einzelmessungen von in eine Richtung ausgesandten Abtaststrahlen zu einem gemeinsamen Messwert zu verrechnen. Es werden somit Einzelmessungen zusammengefasst, in denen derselbe Objektpunkt wiederholt von verschiedenen Abtaststrahlen angetastet wurde beziehungsweise die Lichtpulse der jeweiligen Abtaststrahlen nacheinander denselben Ort beleuchten. Dabei gibt es einen kleinen Zeitversatz zwischen den beteiligten Einzelmessungen, in dem durch die Bewegung der Ablenkeinheit ein anderer Abtaststrahl in die entsprechende Winkelstellung gelangt. Es ist erfindungsgemäß möglich, Einzelmessungen mit tatsächlich im Rahmen von technischen Toleranzen identischer Richtung zusammenzufassen, und damit wird die stärkste Kompensation der Ortsunschärfe durch Mittelung erreicht. Als Zwischenstufe wird unter einer Richtung aber auch lediglich ein kleiner Winkelbereich oder eine Nachbarschaft verstanden. Dabei kommt es darauf an, dass die Nachbarschaft durch Wechsel des Abtaststrahls enger wird als der Winkel, den die Ablenkeinheit über die Zeitspanne der Erfassung der Einzelmessungen für einen gemeinsamen Messwert überstreicht. Auf diese Weise werden nämlich bereits Einzelmessungen aus einer kompakteren Umgebung zusammengefasst als herkömmlich.

Vorzugsweise sind die Bewegungsgeschwindigkeit der Ablenkeinheit, der Rasterabstand der Abtaststrahlen und die Messwiederholzeit zwischen zwei Einzelmessungen eines Abtaststrahls derart aufeinander abgestimmt, dass sich die Ablenkeinheit zwischen zwei Einzelmessungen um ein Vielfaches des Rasterabstands weiterbewegt. Durch diese Abstimmung kommt das Raster der Abtaststrahlen, lässt man die in Bewegungsrichtung der Ablenkeinheit äußeren Abtaststrahlen außer Betracht, bei der nächsten Einzelmessung wieder auf sich selbst zu liegen. Dadurch ist sichergestellt, dass es genügend Abtaststrahlen gibt, die wiederholt nacheinander in dieselbe Richtung ausgesandt werden, deren Einzelmessungen zu einem gemeinsamen Messwert ohne Ortsunschärfe verrechnet werden können.

Vorzugsweise ist eine Winkelrasterzeit die Zeit, bis ein Abtaststrahl durch die Bewegung der Ablenkeinheit den Ort des benachbarten Abtaststrahls in Bewegungsrichtung der Ablenkeinheit erreicht, und die Messwiederholzeit zwischen zwei Einzelmessungen eines Abtaststrahls ist gleich der Winkelrasterzeit. Die Winkelrasterzeit ist nur ein Name für die Zeitspanne, bis das Raster der Abtaststrahlen durch die Bewegung der Ablenkeinheit zumindest bezogen auf eine Abtastebene das nächste Mal und um ein Rasterelement versetzt wieder auf sich selbst zu liegen kommt. Die Winkelrasterzeit hängt folglich von der Bewegungsgeschwindigkeit der Ablenkeinheit und der Rastergröße (Pitch) der Abtaststrahlen ab, d. h. dem gegenseitigen Winkelabstand benachbarter Abtaststrahlen in Bewegungsrichtung der Ablenkeinheit. In dieser bevorzugten Ausführungsform wird nun die Messwiederholzeit und die Winkelrasterzeit gleich gewählt. Die Messwiederholzeit ist die Zeitspanne zwischen zwei Einzelmessungen desselben Abtaststrahls, bei einem Pulsverfahren ist das der Kehrwert der Pulswiederholfrequenz. Dies ist ein Beispiel für eine geeignete Abstimmung von Bewegungsgeschwindigkeit, Rasterabstand und Messwiederholzeit. Bei dieser Wahl trifft jeweils der gegen die Bewegungsrichtung der Ablenkeinheit benachbarte Abtaststrahl bei der nächsten Einzelmessung nochmals denselben Ort auf dem Objekt. Alle Einzellichtsender pulsen vorzugsweise synchron.

Vorzugsweise ist eine Winkelrasterzeit die Zeit, bis ein Abtaststrahl durch die Bewegung der Ablenkeinheit den Ort des benachbarten Abtaststrahls in Bewegungsrichtung der Ablenkeinheit erreicht, und die Messwiederholzeit zwischen zwei Einzelmessungen eines Abtaststrahls ist ein Vielfaches der Winkelrasterzeit. Die Messwiederholzeit ist nun nicht mehr gleich der Winkelrasterzeit gewählt, sondern als Vielfaches. Vorzugsweise pulsen die Einzellichtsender nun gegeneinander zeitversetzt, und zwar von Nachbar zu Nachbar um einen dem Vielfachen entsprechenden Bruchteil der Winkelrasterzeit. Das ergibt bei sonst gleichen Bedingungen eine geringere Winkelauflösung, aber weiterhin ist jeder Ort auf einem Objekt, zu dem ein gemeinsamer Messwert bestimmt wird, genauso oft von einer Einzelmessung erfasst wie wenn Messwiederholzeit und Winkelrasterzeit übereinstimmen.

Vorzugsweise ist eine Winkelrasterzeit die Zeit, bis ein Abtaststrahl durch die Bewegung der Ablenkeinheit den Ort des benachbarten Abtaststrahls in Bewegungsrichtung der Ablenkeinheit erreicht, und die Messwiederholzeit zwischen zwei Einzelmessungen eines Abtaststrahls und die Winkelrasterzeit stehen in einem nicht ganzzahligen Verhältnis, und/oder die Messwiederholzeit ist nicht konstant. Hier ist die Regelmäßigkeit aufgebrochen, und die Einzelmessungen, die zu einem gemeinsamen Messwert verrechnet werden, haben eine gewisse Ortsunschärfe. Ein gewisser Jitter kann aber sogar ein gewünschter Effekt sein. Es ist nicht zu verwechseln mit der herkömmlichen Ortsunschärfe, denn diese folgt stets nur einer Linie mit vergleichsweise langer Ausdehnung.

Die Steuer- und Auswertungseinheit ist bevorzugt dafür ausgebildet, mit mindestens einem voranlaufenden Abtaststrahl, insbesondere dem ersten Abtaststrahl in Bewegungsrichtung der Ablenkeinheit innerhalb einer Abtastebene, eine Vormessung zur Einstellung von Messparametern für weitere Abtaststrahlen durchzuführen. Der voranlaufende Abtaststrahl wird also zusätzlich zu oder anstelle einer Einzelmessung zum dynamischen Einstellen der Messung mit den übrigen Abtaststrahlen benutzt. Ein Beispiel ist eine Pegelmessung des voranlaufenden Abtaststrahls, mit dem die übrigen Abtaststrahlen durch Anpassung von Sendeleistung, Pulsstärke, empfangsseitiger Verstärkung oder Schwellen ausgesteuert werden.

Die Vormessung ist vorzugsweise passiv bei für den voranlaufenden Abtaststrahl deaktiviertem Lichtsender. Der voranlaufende Abtaststrahl ist dann kein Abtaststrahl im bisherigen Sinne mehr und trägt keine Einzelmessung bei. Es ist aber dennoch möglich, genau das Sichtfeld eines vollständigen Abtaststrahls zu erfassen. So kann speziell Fremdlicht als eine wichtige Komponente zur Einstellung von Messparametern vorab erfasst werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners;
- Fig. 2: eine Querschnittsansicht eines matrixförmigen Rasters von Abtaststrahlen eines Laserscanners;
- Fig. 3: eine Darstellung von Einzelmessungen der Abtaststrahlen eines Laserscanners und deren Zuordnung zu einem gemeinsamen Messwert über mehrere Abtaststrahlen hinweg;
- Fig. 4: eine alternative Darstellung der Zuordnung von Einzelmessungen von Abtaststrahlen zu einem gemeinsamen Messwert;
- Fig. 5: eine Darstellung ähnlich Figur 3 mit halbierter Messwiederholrate und Zeitversatz der Einzelmessungen zwischen den Abtaststrahlen;
- Fig. 6: eine Darstellung ähnlich Figur 4 mit nochmals halbierter Messwiederholrate und angepasstem Zeitversatz der Einzelmessungen;
- Fig. 7: eine Querschnittsansicht eines matrixförmigen Rasters von Abtaststrahlen, das im Gegensatz zu Figur 2 gegenüber der Bewegungsrichtung der Ablenkung schrägt steht;
- Fig. 8: eine Querschnittsansicht eines spaltenförmigen Rasters von Abtaststrahlen eines Laserscanners zur Erläuterung einer herkömmlichen Messwerterfassung; und
- Fig. 9: eine Darstellung von Einzelmessungen der Abtaststrahlen gemäß Figur 8 und deren herkömmliche Zusammenfassung zu einem gemeinsamen Messwert.

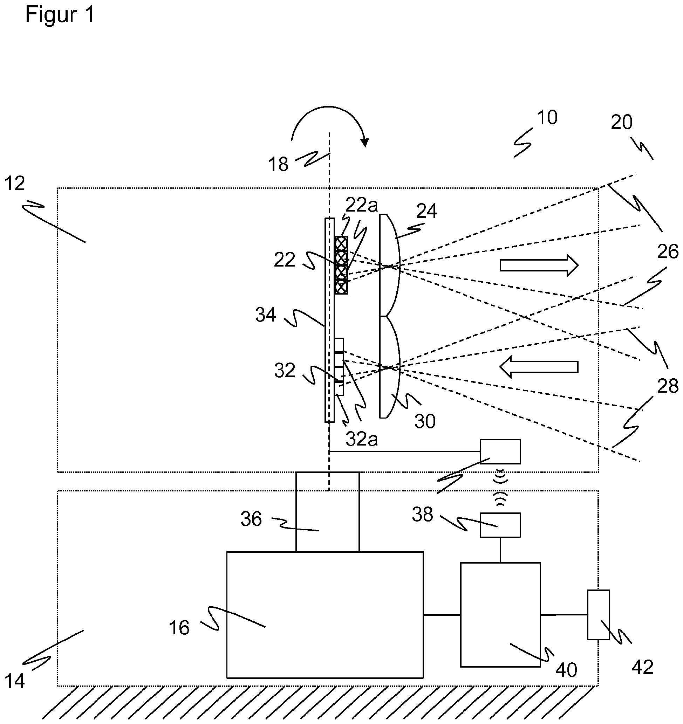

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Ablenkeinheit 12 und eine Sockeleinheit 14. Die Ablenkeinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Ablenkeinheit 12 in eine Bewegung um eine Drehachse 18 versetzt, um so einen Überwachungsbereich 20 periodisch abzutasten.

In der Ablenkeinheit 12 erzeugt ein Lichtsender 22 mit mehreren Lichtquellen 22a, beispielsweise LEDs oder Laser in Form von Kantenemittern oder VCSELs, mit Hilfe einer gemeinsamen Sendeoptik 24 mehrere Sendelichtstrahlen 26, die in den Überwachungsbereich 20 ausgesandt werden. Im dargestellten Beispiel sind es vier Sendelichtstrahlen 26 für vier Abtastebenen, es können mehr, auch deutlich mehr, und ebenso weniger Sendelichtstrahlen 26 sein. Außerdem ist zu beachten, dass es sich um eine Schnittansicht handelt. Der Lichtsender 22 ist deshalb als Spalte dargestellt, tatsächlich sind vorzugsweise weitere Lichtquellen 22a in eine Richtung senkrecht zur Papierebene vorhanden. Anstelle einer gemeinsamen Sendeoptik 24 sind Einzeloptiken möglich. Die mehreren Sendelichtstrahlen 26 können auch dadurch entstehen, dass das Licht einer Lichtquelle oder einiger Lichtquellen durch ein Strahlteilerelement, ein diffraktives optisches Element oder dergleichen aufgeteilt wird. In einer weiteren Ausführungsform wird flächig oder mit einer Lichtlinie beleuchtet, und das Sendelicht wird erst empfangsseitig in Abtaststrahlen unterteilt.

Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode). Die Bemerkungen zur Sendeseite gelten sinngemäß auch hier. Es gibt also vorzugsweise weitere Lichtempfangselemente 32a in einer Richtung senkrecht zur Papierebene, es können mehrere Einzeloptiken vorgesehen sein, und mehrere Abtaststrahlen können auf einem gemeinsamen Lichtempfangselement erfasst werden.

Lichtsender 22 und Lichtempfänger 32 sind in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Ablenkeinheit 12 mit der ruhenden Sockeleinheit 14. Dort befindet sich eine Steuer- und Auswertungseinheit 40, die zumindest teilweise auch auf der Leiterkarte 34 oder an anderem Ort in der Ablenkeinheit 12 untergebracht sein kann. Insbesondere ist vorstellbar, einen Teil der Auswertung schon im Lichtempfänger 32 unterzubringen, etwa durch eine ASIC-Bauweise (Application-Specific Integrated Circuit), wobei einzelne Zellen gleich digital auswertet und weiterverarbeitet werden. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Ablenkeinheit 12 bestimmt.

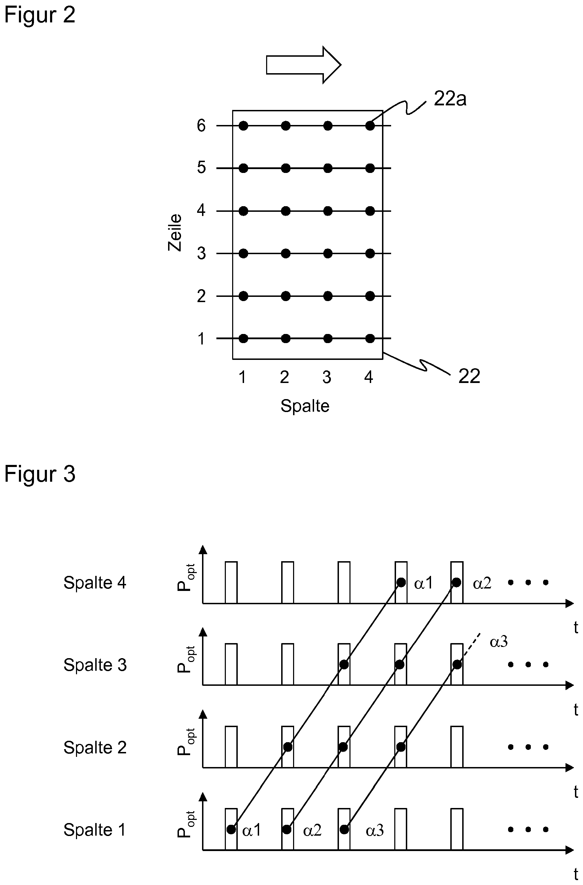

Zur Auswertung wird in einem noch anhand der Figuren 2 bis 7 genauer zu erläuternden Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene, sofern es mehrere Abtastebenen gibt, ist über die Identität des jeweiligen Abtaststrahls 26, 28 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie einleitend kurz vorgestellt.

Der dargestellte Sensor 10 ist ein Laserscanner mit rotierendem Messkopf, nämlich der Ablenkeinheit 12. Alternativ ist auch eine periodische Ablenkung mittels Drehspiegel oder einem Facettenspiegelrad denkbar. Eine weitere alternative Ausführungsform schwenkt die Ablenkeinheit 12 hin und her, entweder anstelle der Drehbewegung oder zusätzlich um eine zweite Achse senkrecht zur Drehbewegung, um auch in Elevation eine Abtastbewegung zu erzeugen. Weiterhin kann die Scanbewegung zur Erzeugung der Scanebene stattdessen auch mit anderen bekannten Methoden erzeugt werden, beispielsweise MEMS-Spiegeln, optical phased arrays oder akusto-optischen Modulatoren.

Während der Bewegung der Ablenkeinheit 12 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Abtastebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier vereinfachend als Abtastebenen bezeichnet.

Figur 2 zeigt eine Draufsicht auf die Lichtquellen 22a des Lichtsenders 22. Diese Anordnung entspricht ebenso einer Querschnittsdarstellung des Rasters der Abtaststrahlen 26, 28. Ein Pfeil stellt die Bewegungsrichtung der Ablenkeinheit 12 dar. In diesem Beispiel handelt es sich demnach um eine Matrixanordnung von Lichtquellen 22a beziehungsweise Abtaststrahlen, vorzugsweise in Kombination mit entsprechenden Matrixanordnung von Lichtempfangselementen 32a des Lichtempfängers 32. Wie schon beschrieben, gibt es zahlreiche Möglichkeiten, Abtaststrahlen 26, 28 zu erzeugen, und auf die konkrete Art und Weise kommt es für die erfindungsgemäße Auswertung nicht an.

Das Muster der Anordnung ist sehr variabel anpassbar, d. h. die mögliche Anzahl und Anordnung der Abtaststrahlen 26, 28 ist sehr variabel. In Figur 2 ist es ein regelmäßiges rechteckiges Raster, das zu der Bewegungsrichtung der Ablenkeinheit 12 ausgerichtet ist. Dadurch werden mehrere Abtastebenen zugleich von mehreren Abtaststrahlen überstrichen. Im Beispiel sind es sechs Abtastebenen und vier Abtaststrahlen je Abtastebene. Mehr oder weniger Abtastebenen, etwa 16, 64, 128 oder eine noch größere Anzahl, und mehr oder weniger Abtaststrahlen je Abtastebene sind möglich. Für die Erfindung besonders bevorzugt ist der Fall, dass innerhalb einer Abtastebene oder Zeile zahlreiche Abtaststrahlen vorgesehen sind, weil damit eine Erzeugung von Messwerten durch Mittelung über viele Einzelmessungen möglich ist.

Figur 3 illustriert ein Messwerterfassungsschema beispielhaft für die unterste der Zeilen oder Abtastebenen der Figur 2. Mit jedem Abtaststrahl 26, 28 werden wiederholt Einzelmessungen zur Bestimmung der Lichtlaufzeit durchgeführt. Dazu wird vorzugsweise ein Lichtpuls ausgesandt und wieder empfangen. Es gibt vier Spalten von Abtaststrahlen 26, 28 und somit vier redundante Einzelmessungen in derselben Abtastebene. Bei einem herkömmlichen Pulsmittelungsverfahren werden, wie einleitend zu Figur 9 erläutert, die aufeinanderfolgenden Einzelmessungen ein und desselben Abtaststrahls zu einem gemeinsamen Messwert zusammengefasst.

Erfindungsgemäß wird die Tatsache ausgenutzt, dass durch die redundanten Einzelmessungen in derselben Abtastebene derselbe Objektpunkt mehrfach von verschiedenen Abtaststrahlen 26, 28 getroffen wird. Das geschieht immer dann, wenn sich die Ablenkeinheit 12 um das Winkelstück weiterbewegt hat, das dem Rasterabstand in der Zeile benachbarter Abtaststrahlen 26, 28 entspricht. Es stehen also mehrere, in diesem Fall vier, Einzelmessungen für den Objektpunkt zur Verfügung, und diese werden zu einem gemeinsamen Messwert zusammengeführt. Das Zusammenführen kann darin bestehen, dass die Empfangssignale der Einzelmessungen aufaddiert oder gemittelt werden, oder es wird schon aus den Einzelmessungen eine Einzellichtlaufzeit bestimmt und dann auf deren Ebene gemittelt, oder es erfolgt eine sonstige gemeinsame oder statistische Auswertung.

In Figur 3 sind die Einzelmessungen der vier Abtaststrahlen 26, 28 aus den vier Spalten in der betrachteten Zeile als Messpulse gegen die Zeit aufgetragen. Es werden über die Abtaststrahlen 26, 28 hinweg die jeweiligen Einzelmessungen zusammengefasst, die einer der Winkelstellungen α1... αn der Ablenkeinheit 12 entsprechen. Das ergibt dann die gezeigten Diagonalen, denn zu jeder der Winkelstellungen α1... αn trägt zuerst der Abtaststrahl 26, 28 unten links in Position (1,1) der Matrix aus Figur 2, danach dessen Nachbar (2,1) und zuletzt der Abtaststrahl 26, 28 in der Position (4,1) eine Einzelmessung bei.

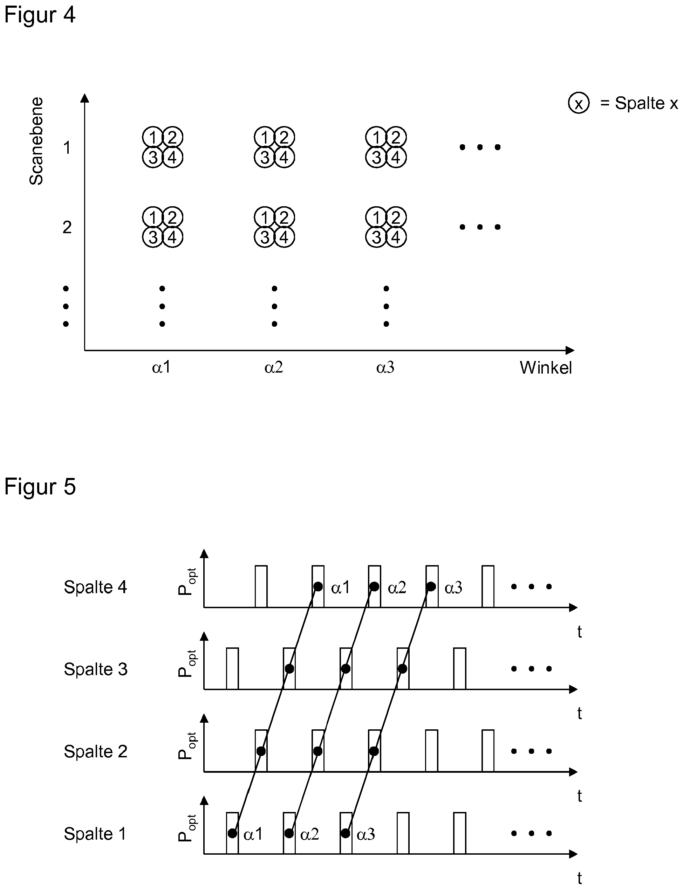

Figur 4 ist nochmals eine alternative Darstellung dieses Messwerteerfassungsschemas. Hier ist nun der Winkel auf der X-Achse und die Zeile oder Scanebene auf der Y-Achse aufgetragen. Für jeden Winkel α1... αn und jede Scanebene wird ein Messwert nacheinander aus den Einzelmessungen der Spalte 1...4 bestimmt. Die Einzelmessung ist jeweils durch die Zahl der Spalte in einem Kreis symbolisiert, wobei zur Bestimmung der Position des zugehörigen Abtaststrahls 26, 28 der Vollständigkeit halber die auf der Y-Achse bezeichnete Scanebene zu ergänzen wäre.

Auf diese Weise erfasst der Sensor 10 durch Kombination von Einzelmessungen über Abtaststrahlen 26, 28 hinweg jeden Objektpunkt vierfach, bei abweichender Spaltenzahl allgemein n-fach. Anders als herkömmlich misst jede der Einzelmessungen in Richtung desselben Objektpunktes, es gibt kein örtliches Verschmieren durch die Scanbewegung wie herkömmlich nach Figur 9. Die zwischenzeitliche Weiterbewegung der Ablenkeinheit 12 wird durch Wechsel auf einen entsprechend nachbewegten anderen Abtaststrahl 26, 28 kompensiert.

Als Zahlenbeispiel sei für eine Ausführungsform angenommen, dass die Ablenkeinheit 12 mit einer Motordrehfrequenz f_{Motor}= 50 Hz rotiert. Damit benötigt die Ablenkeinheit 55,6 µs/°. Weiter sei als Lichtsender 22 ein VCSEL-Array mit einer Matrixanordnung von 128 x 64 Lichtquellen 22a vorgesehen, empfangsseitig eine entsprechende SPAD-Matrix als Lichtempfänger 32. Der Abstand (Pitch) zwischen den Lichtquellen 22a betrage 150 µm bei einer Gesamtabmessung der Matrixanordnung von 20 mm x 10 mm. Bei einer Brennweite von Sendeoptik 24 beziehungsweise Empfangsoptik 30 von f = 50 mm und einem Gesichtsfeld von 360° x 20° ergeben sich ein Winkelabstand zwischen den Ebenen von 0,17° und auch ein Winkelabstand zwischen zwei Abtaststrahlen 26, 28 innerhalb einer Ebene von 0,17°. Die Ablenkeinheit 12 dreht sich bei 55,6 µs/° in 9,5 µs um diese 0,17° weiter. Die für den Winkelabstand zwischen zwei Abtaststrahlen 26, 28 benötigte Zeit von hier beispielhaft 9,5 µs wird auch als Winkelrasterzeit bezeichnet.

Es ist nun sinnvoll, die Messwiederholrate oder Pulswiederholfrequenz fᵣₑₚ, mit der jeder Abtaststrahl 26, 28 Einzelmessungen durchführt, auf die Scangeschwindigkeit und den Winkelabstand der Abtaststrahlen 26, 28 innerhalb einer Abtastebene abzustimmen. Dadurch kann gewährleistet werden, dass die Abtaststrahlen 26, 28 für die nächste Einzelmessung abgesehen von den Randbereichen bezüglich der Bewegungsrichtung der Ablenkeinheit 12 quasi wieder das gleiche Muster bilden, das Raster also versetzt wieder in sich einrastet. Dann tasten die Abtaststrahlen 26, 28 wiederum denselben Ort im Überwachungsbereich 20 ab, den bei einer früheren Einzelmessung ein in Bewegungsrichtung der Ablenkeinheit 12 vorlaufender anderer Abtaststrahl 26, 28 bereits erfasst hatte.

In einer bevorzugten Ausführungsform sind dafür Messwiederholzeit und Winkelrasterzeit gleich. Diesen Fall illustrieren die Figuren 3 und 4. Die Lichtquellen 22a einer Abtastebene werden dafür synchron gepulst und tragen nacheinander genau eine Einzelmessung zum jeweiligen gemeinsamen Messwert bei. Als Zahlenwert zum obigen Beispiel ist dafür fᵣₑₚ = 100 kHz oder etwas darunter bei 95 kHz zu wählen, denn dann folgen die Pulse mit einer Messwiederholzeit von 10 µs ≈ 9,5 µs aufeinander, was der oben beispielhaft erhaltenen Winkelrasterzeit entspricht.

Um zumindest einen Teil der erfindungsgemäßen Vorteile zu verwirklichen, genügt es, die Abstimmung nur ungefähr vorzunehmen. Dann ist im Vergleich zu der Situation der Figur 9 die Winkelausdehnung des für einen gemeinsamen Messwert beleuchteten Ortsbereichs immer noch sehr deutlich verkleinert.

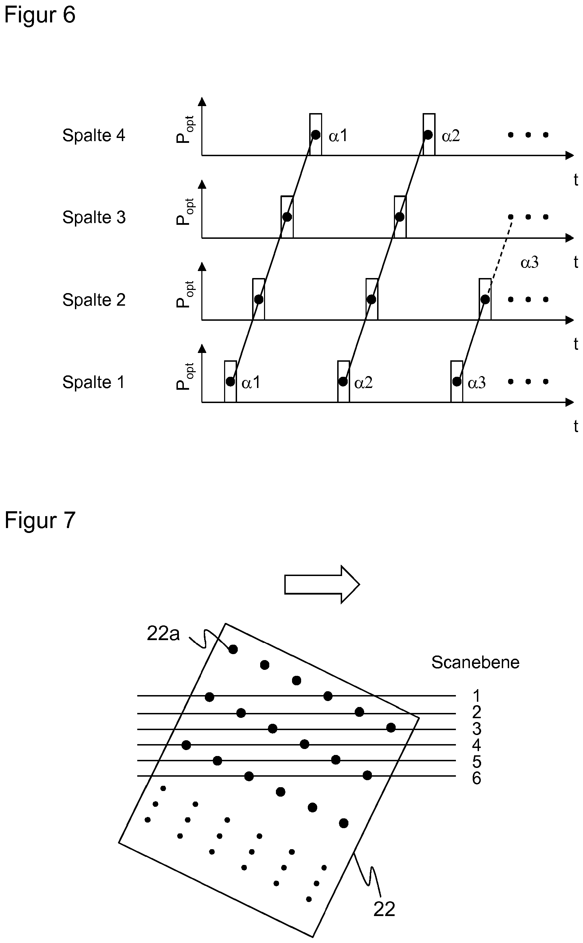

Es ist alternativ denkbar, eine langsamere Messwiederholzeit zu wählen, die dann vorzugsweise ein ganzzahliges Vielfaches der Winkelrasterzeit ist. Die Figuren 5 und 6 zeigen in Darstellungen analog der Figur 3 jeweils ein Beispiel, in dem die Messwiederholzeit die doppelte beziehungsweise vierfache Winkelrasterzeit beträgt. Die Lichtquellen 22a sind nun bevorzugt nicht mehr synchron gepulst, sondern in einem Zeitversatz, durch den sich die Lichtquellen 22a eine Winkelrasterzeit gleichmäßig aufteilen. Sie tragen aber weiterhin nacheinander je eine Einzelmessung zu jedem gemeinsamen Messwert bei. Was sich verringert, ist die resultierende Winkelauflösung der gemeinsamen Messwerte. Dies könnte bei Bedarf durch kleinere Mittelungstiefen, also weniger Einzelmessungen je gemeinsamem Messwert, zumindest teilweise ausgeglichen werden.

Die Messwiederholzeit kann grundsätzlich kürzer gewählt werden als die Winkelrasterzeit. Das bedeutet aber zwangsläufig, dass das Raster der Abtaststrahlen 26, 28 noch nicht aufgrund der Bewegung der Ablenkeinheit 12 in sich überführt sein kann, also die Einzelmessungen nicht denselben Ort auf dem Objekt treffen. Der resultierende überstrichene Winkelabschnitt bleibt dennoch weiterhin wesentlich kleiner als bei herkömmlicher Pulsmittelung wie in Figur 9.

Das Verhältnis zwischen Messwiederholzeit und Winkelrasterzeit muss nicht zwangsläufig ganzzahlig sein. Dann sind die gemessenen Winkelpositionen bei jedem Umlauf anders, aber immer noch bekannt, und es tritt eine gewisse Ortsunschärfe auf. Unter bestimmten Randbedingungen kann das sogar Vorteile haben, etwa in Bezug auf die gegenseitige Störung von optoelektronischen Sensoren. Mit ähnlichen Überlegungen ist denkbar, die Einzelmessungen nicht ganz gleichmäßig aufeinanderfolgen zu lassen oder ungleiche Abstände zwischen den Winkelpositionen vorzusehen, an denen Messwerte erfasst werden, insbesondere Abtaststrahlen 26, 28 im unregelmäßigem Raster vorzusehen.

Figur 7 illustriert noch ein Ausführungsbeispiel, in dem das Raster der Abtaststrahlen 26, 28 nicht zu der Bewegungsrichtung der Ablenkeinheit 12 ausgerichtet ist, also schräg steht. Das kann einerseits zu einer gewissen, hingenommenen Ortsunschärfe führen. Es ist aber auch möglich, den Winkel, in dem das Raster schräg steht, gerade so zu wählen, dass wiederum mehrere Abtaststrahlen 26, 28 dieselbe Abtastebene überstreichen.

Im Beispiel der Figur 7 sind das je zwei Abtaststrahlen 26, 28, wobei einige Abtaststrahlen 26, 28 im oberen und unteren Bereich isoliert bleiben. Es entstehen sozusagen effektive Zeilen innerhalb von Abtastebenen, die entsprechend verkürzt sind. Auch nur zwei Abtaststrahlen 26, 28 in einer effektiven Zeile und damit in einer Abtastebene können je nach sonstigen Randbedingungen bereits die Winkelausdehnung im Vergleich zum herkömmlichen Vorgehen nach Figur 9 halbieren. Beispielsweise werden mit dem einen Abtaststrahl 26, 28 n/2 Einzelmessungen über einen Winkelbereich durchgeführt und mit dem anderen Abtaststrahl 26, 28 nochmals n/2 Einzelmessungen an denselben oder leicht versetzen n/2 Orten. So wird ein Messwert auf n Einzelmessungen aufgebaut, die aber lediglich über einen Winkelbereich erfasst wurden, mit dem herkömmlich nur n/2 Einzelmessungen möglich wären. Als Ausgleich dafür, dass die Ortsunschärfe nur gemildert und nicht aufgehoben wird, können mit der schrägen Matrix wesentlich mehr Scanebenen erfasst werden.

Die verschiedenen, denselben Ort treffenden Abtaststrahlen 26, 28 können im Übrigen nicht nur dafür verwendet werden, Messwerte aus Einzelmessungen mit geringerer Ortsunschärfe aufzubauen. Ein Abtaststrahl 26, 28 oder mehrere Abtaststrahlen 26, 28, vorzugsweise die ersten und damit bezüglich der Bewegungsrichtung der Ablenkeinheit 12 vorauslaufenden Abtaststrahlen 26, 28, können auch für eine Vormessung eingesetzt werden. Das wird je Abtastebene oder gemeinsam für mehrere oder alle Abtastebenen genutzt, um Messparameter für die nachfolgenden Abtaststrahlen 26, 28 zu optimieren. Ein Beispiel ist eine Pegelmessung, mit der die Empfindlichkeit zur Vermeidung von Übersteuerung oder zu schwachen Signalen ausgesteuert wird. Denkbar ist auch, die Lichtquelle 22a für den vorlaufenden Abtaststrahl 26, 28 zu deaktivieren und so den isolierten Fremdlichtanteil zu bestimmen und dann die Mess- und Auswertungsparameter, wie Empfindlichkeit, Binarisierungs- oder Digitalisierungsschwellen und dergleichen, optimal für diese Fremdlichtmenge einzustellen. Diese Vormessung ist sehr zielgerichtet, weil sie bereits denselben Messort bei lediglich minimalem Zeitversatz betrifft.

## Patentansprüche

1. Optoelektronischer Sensor (10), insbesondere Laserscanner, zur Erfassung von Objekten in einem Überwachungsbereich (20), mit einem Lichtsender (22) zum Aussenden von Sendelicht (26), einer beweglichen Ablenkeinheit (12) zur periodischen Ablenkung des Sendelichts (26) und einen Lichtempfänger (32) zum Empfangen des von Objekten in dem Überwachungsbereich (20) remittiertem Sendelichts (28), wobei das Sendelicht (26) mehrere voneinander separierte Abtaststrahlen (26, 28) bildet und/oder der Lichtempfänger (32) das remittierte Sendelicht (28) als mehrere voneinander separierte Abtaststrahlen (26, 28) empfängt, wobei separierte Abtaststrahlen als voneinander separierte Lichtbündel zu verstehen sind, sowie mit einer Steuer- und Auswertungseinheit (40), die dafür ausgebildet ist, mit einem jeweiligen Abtaststrahl (26, 28) Einzelmessungen durchzuführen und mehrere Einzelmessungen zu einem gemeinsamen Messwert für den Abstand zu dem Objekt zu verrechnen, wobei sich die Ablenkeinheit zwischen den zu einem gemeinsamen Messwert beitragenden Einzelmessungen weiterbewegt,
**dadurch gekennzeichnet,**
**dass** die Steuer- und Auswertungseinheit (40) weiterhin dafür ausgebildet ist, Einzelmessungen mindestens zweier unterschiedlicher Abtaststrahlen (26, 28) zu einem gemeinsamen Messwert zu verrechnen.

2. Sensor (10) nach Anspruch 1,
wobei der Lichtsender (22) eine Vielzahl von Einzellichtsendern (22a) aufweist, die jeweils einzeln oder gruppenweise einen Abtaststrahl (26, 28) erzeugen und/oder wobei der Lichtempfänger (32) eine Vielzahl von Einzellichtempfängern (32a) aufweist, die jeweils einzeln oder gruppenweise das remittierte Sendelicht (28) als einen Abtaststrahl (26, 28) empfangen.

3. Sensor (10) nach Anspruch 2,
wobei die Einzellichtsender (22a) und/oder die Einzellichtempfänger (32a) eine Zeilenanordnung oder eine Matrixanordnung bilden.

4. Sensor (10) nach Anspruch 2 oder 3,
wobei die Einzellichtsender (22a) VCSEL und/oder die Einzellichtempfänger (32a) SPADs aufweisen.

5. Sensor (10) nach einem der Ansprüche 2 bis 4,
wobei die Zeilenanordnung oder Matrixanordnung bezüglich der Bewegungsrichtung der Ablenkeinheit (12) ausgerichtet ist.

6. Sensor (10) nach einem der Ansprüche 2 bis 4,
wobei die Zeilenanordnung oder Matrixanordnung schräg zu der Bewegungsrichtung der Ablenkeinheit (12) steht.

7. Sensor (10) nach einem der vorhergehenden Ansprüche,
wobei die Abtaststrahlen (26, 28) mehrere Abtastebenen überstreichen und/oder wobei mehrere Abtaststrahlen (26, 28) dieselbe Abtastebene überstreichen.

8. Sensor (10) nach einem der vorhergehenden Ansprüche,
wobei die Steuer- und Auswertungseinheit (40) dafür ausgebildet ist, Einzelmessungen von in eine Richtung ausgesandten Abtaststrahlen (26, 28) zu einem gemeinsamen Messwert zu verrechnen, wobei wiederholt derselbe Objektpunkt von verschiedenen Abtaststrahlen (26, 28) angetastet wird.

9. Sensor (10) nach einem der vorhergehenden Ansprüche,
wobei die Bewegungsgeschwindigkeit der Ablenkeinheit (12), der Rasterabstand der Abtaststrahlen (26, 28) und die Messwiederholzeit zwischen zwei Einzelmessungen eines Abtaststrahls (26, 28) derart aufeinander abgestimmt sind, dass sich die Ablenkeinheit (12) zwischen zwei Einzelmessungen um ein Vielfaches des Rasterabstands weiterbewegt.

10. Sensor (10) nach einem der vorhergehenden Ansprüche,
wobei eine Winkelrasterzeit die Zeit ist, bis ein Abtaststrahl (26, 28) durch die Bewegung der Ablenkeinheit (12) den Ort des benachbarten Abtaststrahls (26, 28) in Bewegungsrichtung der Ablenkeinheit (12) erreicht, und wobei die Messwiederholzeit zwischen zwei Einzelmessungen eines Abtaststrahls (26, 28) gleich der Winkelrasterzeit ist.

11. Sensor (10) nach einem der Ansprüche 1 bis 9,
wobei eine Winkelrasterzeit die Zeit ist, bis ein Abtaststrahl (26, 28) durch die Bewegung der Ablenkeinheit (12) den Ort des benachbarten Abtaststrahls (26, 28) in Bewegungsrichtung der Ablenkeinheit (12) erreicht, und wobei die Messwiederholzeit zwischen zwei Einzelmessungen eines Abtaststrahls (26, 28) ein Vielfaches der Winkelrasterzeit ist.

12. Sensor (10) nach einem der Ansprüche 1 bis 9,
wobei eine Winkelrasterzeit die Zeit ist, bis ein Abtaststrahl (26, 28) durch die Bewegung der Ablenkeinheit (12) den Ort des benachbarten Abtaststrahls (26, 28) in Bewegungsrichtung der Ablenkeinheit (12) erreicht, und wobei die Messwiederholzeit zwischen zwei Einzelmessungen eines Abtaststrahls (26, 28) und die Winkelrasterzeit in einem nicht ganzzahligen Verhältnis stehen, und/oder wobei die Messwiederholzeit nicht konstant ist.

13. Sensor (10) nach einem der vorhergehenden Ansprüche,
wobei die Steuer- und Auswertungseinheit (40) dafür ausgebildet ist, mit mindestens einem voranlaufenden Abtaststrahl (26, 28), insbesondere dem ersten Abtaststrahl (26, 28) in Bewegungsrichtung der Ablenkeinheit (12) innerhalb einer Abtastebene, eine Vormessung zur Einstellung von Messparametern für weitere Abtaststrahlen (26, 28) durchzuführen.

14. Sensor (10) nach Anspruch 13,
wobei die Lichtquelle (22a) für den vorlaufenden Abtaststrahl (26, 28) deaktiviert ist, um so den isolierten Fremdlichtanteil zu bestimmen.

15. Verfahren zur Erfassung von Objekten in einem Überwachungsbereich (20), bei dem Sendelicht (26) ausgesandt, das Sendelicht (26) periodisch abgelenkt und von Objekten in dem Überwachungsbereich (20) remittiertes Sendelicht (28) empfangen wird, wobei das Sendelicht (26) mehrere voneinander separierte Abtaststrahlen (26, 28) bildet und/oder das remittierter Sendelicht (28) als mehrere voneinander separierte Abtaststrahlen empfangen (26, 28) wird, wobei separierte Abtaststrahlen als voneinander separierte Lichtbündel zu verstehen sind, und wobei mit einem jeweiligen Abtaststrahl (26, 28) Einzelmessungen durchgeführt und mehrere Einzelmessungen zu einem gemeinsamen Messwert für den Abstand zu dem Objekt verrechnet werden, wobei sich die Ablenkeinheit zwischen den zu einem gemeinsamen Messwert beitragenden Einzelmessungen weiterbewegt,
**dadurch gekennzeichnet,**
**dass** Einzelmessungen mindestens zweier unterschiedlicher Abtaststrahlen (26, 28) zu einem gemeinsamen Messwert verrechnet werden.

## Claims

1. An optoelectronic sensor (10), in particular a laser scanner, for detecting objects in a monitored area (20), having a light transmitter (22) for transmitting transmitted light (26), a movable deflection unit (12) for periodically deflecting the transmitted light (26), and a light receiver (32) for receiving the remitted transmitted light (28) remitted by objects in the monitored area (20), the transmitted light (26) forming a plurality of scanning beams (26, 28) separated from one another and/or the light receiver (32) receiving the remitted transmitted light (28) as a plurality of scanning beams (26, 28) separated from one another, wherein separated scanning beams are to be understood as light beams separated from one another, and having a control and evaluation unit (40) which is configured to carry out individual measurements with a respective scanning beam (26, 28) and to combine a plurality of individual measurements to form a common measured value for the distance to the object, the deflection unit moving on between the individual measurements contributing to a common measured value, **characterized in that** the control and evaluation unit (40) is further configured for combining individual measurements of at least two different scanning beams (26, 28) into a common measured value.

2. The sensor (10) according to claim 1,
wherein the light transmitter (22) comprises a plurality of individual light transmitters (22a), each of which individually or in groups generating a scanning beam (26, 28) and/or wherein the light receiver (32) comprises a plurality of individual light receivers (32a), each of which individually or in groups receiving the remitted transmitted light (28) as a scanning beam (26, 28).

3. The sensor (10) according to claim 2,
wherein the individual light transmitters (22a) and/or the individual light receivers (32a) form a row arrangement or a matrix arrangement.

4. The sensor (10) according to claim 2 or 3,
wherein the individual light transmitters (22a) comprise VCSELs and/or the individual light receivers (32a) comprise SPADs.

5. The sensor (10) according to any of claims 2 to 4,
wherein the row arrangement or matrix arrangement is aligned with respect to the direction of movement of the deflection unit (12).

6. The sensor (10) according to any of claims 2 to 4,
wherein the row arrangement or matrix arrangement is tilted with respect to the direction of movement of the deflection unit (12).

7. The sensor (10) according to any of the preceding claims,
wherein the scanning beams (26, 28) scan a plurality of scanning planes and/or wherein a plurality of scanning beams (26, 28) scan the same scanning plane.

8. The sensor (10) according to any of the preceding claims,
wherein the control and evaluation unit (40) is configured for combining individual measurements of scanning beams (26, 28) transmitted in one direction into a common measured value, wherein the same object point is repeatedly scanned by different scanning beams (26, 28).

9. The sensor (10) according to any of the preceding claims,
wherein the speed of movement of the deflection unit (12), the raster spacing of the scanning beams (26, 28), and the measurement repetition time between two individual measurements of a scanning beam (26, 28) are matched to one another in such a way that the deflection unit (12) moves on by a multiple of the raster spacing between two individual measurements.

10. The sensor (10) according to any of the preceding claims,
wherein an angular raster time is the time until a scanning beam (26, 28) reaches the location of the adjacent scanning beam (26, 28) in the direction of movement of the deflection unit (12) due to the movement of the deflection unit (12), and wherein the measurement repetition time between two individual measurements of a scanning beam (26, 28) is equal to the angular raster time.

11. The sensor (10) according to any one of claims 1 to 9,
wherein an angular raster time is the time until a scanning beam (26, 28) reaches the location of the adjacent scanning beam (26, 28) in the direction of movement of the deflection unit (12) by the movement of the deflection unit (12), and wherein the measurement repetition time between two individual measurements of a scanning beam (26, 28) is a multiple of the angular raster time.

12. The sensor (10) according to any one of claims 1 to 9,
wherein an angular raster time is the time until a scanning beam (26, 28) reaches the location of the adjacent scanning beam (26, 28) in the direction of movement of the deflection unit (12) due to the movement of the deflection unit (12), and wherein the measurement repetition time between two individual measurements of a scanning beam (26, 28) and the angular raster time are in a non-integer relationship, and/or wherein the measurement repetition time is not constant.

13. The sensor (10) according to any one of the preceding claims,
wherein the control and evaluation unit (40) is configured to perform a pre-measurement with at least one advancing scanning beam (26, 28), in particular the first scanning beam (26, 28) in the direction of movement of the deflection unit (12) within a scanning plane, for setting measurement parameters for further scanning beams (26, 28).

14. The sensor (10) according to claim 13,
wherein the light transmitter (22, 22a) for the advancing scanning beam (26, 28) is deactivated in order to determine the isolated ambient light part.

15. A method for detecting objects in a monitored area (20), wherein transmitted light (26) is transmitted, the transmitted light (26) is periodically deflected and remitted transmitted light (28) remitted from objects in the monitored area (20) is received, the transmitted light (26) forming a plurality of scanning beams (26, 28) separated from one another and/or the remitted transmitted light (28) being received (26, 28) as a plurality of scanning beams separated from one another, wherein separated scanning beams are to be understood as light beams separated from one another, and wherein individual measurements are carried out with a respective scanning beam (26, 28) and a plurality of individual measurements are combined to form a common measured value for the distance to the object, the deflection unit moving on between the individual measurements contributing to a common measured value,
**characterized in that** individual measurements of at least two different scanning beams (26, 28) are combined into a common measured value.

## Revendications

1. Capteur optoélectronique (10), en particulier scanner à laser, pour la détection d'objets dans une zone à surveiller (20), comportant un émetteur de lumière (22) pour émettre de la lumière d'émission (26), une unité de déviation mobile (12) pour la déviation périodique de la lumière d'émission (26), et un récepteur de lumière (32) pour recevoir de la lumière d'émission (28) réémise par des objets dans la zone à surveiller (20), la lumière d'émission (26) formant plusieurs rayons de balayage (26, 28) séparés les uns des autres et/ou le récepteur de lumière (32) recevant la lumière d'émission réémise (28) sous forme de plusieurs rayons de balayage (26, 28) séparés les uns des autres, les rayons de balayage séparés étant entendus comme faisceaux lumineux séparés les uns des autres, et comportant une unité de commande et d'évaluation (40) réalisée pour effectuer des mesures individuelles avec un rayon de balayage (26, 28) respectif et pour prendre en compte plusieurs mesures individuelles afin de calculer une valeur de mesure commune pour la distance à l'objet, l'unité de déviation continuant à se déplacer entre les mesures individuelles qui contribuent à une valeur de mesure commune,
**caractérisé en ce que**
l'unité de commande et d'évaluation (40) est en outre réalisée pour prendre en compte des mesures individuelles d'au moins deux rayons de balayage différents (26, 28) afin de calculer une valeur de mesure commune.

2. Capteur (10) selon la revendication 1,
dans lequel l'émetteur de lumière (22) comprend une multitude d'émetteurs de lumière individuels (22a), dont chacun génère individuellement ou en groupe un rayon de balayage (26, 28), et/ou le récepteur de lumière (32) comprend une multitude de récepteurs de lumière individuels (32a), dont chacun reçoit individuellement ou en groupe la lumière d'émission réémise (28) en tant que rayon de balayage (26, 28).

3. Capteur (10) selon la revendication 2,
dans lequel les émetteurs de lumière individuels (22a) et/ou les récepteurs de lumière individuels (32a) forment un agencement en ligne ou un agencement en matrice.

4. Capteur (10) selon la revendication 2 ou 3,
dans lequel les émetteurs de lumière individuels (22a) comprennent des diodes de type VCSEL et/ou les récepteurs de lumière individuels (32a) comprennent des diodes de type SPAD.

5. Capteur (10) selon l'une des revendications 2 à 4,
dans lequel l'agencement en ligne ou l'agencement en matrice est aligné par rapport à la direction de mouvement de l'unité de déviation (12).

6. Capteur (10) selon l'une des revendications 2 à 4,
dans lequel l'agencement en ligne ou l'agencement en matrice est disposé en oblique par rapport à la direction de mouvement de l'unité de déviation (12).

7. Capteur (10) selon l'une des revendications précédentes,
dans lequel les rayons de balayage (26, 28) balayent plusieurs plans de balayage, et/ou plusieurs rayons de balayage (26, 28) balayent le même plan de balayage.

8. Capteur (10) selon l'une des revendications précédentes,
dans lequel l'unité de commande et d'évaluation (40) est réalisée pour prendre en compte des mesures individuelles de rayons de balayage (26, 28) émis dans une direction afin de calculer une valeur de mesure commune, le même point de l'objet étant balayé de manière répétée par différents rayons de balayage (26, 28).

9. Capteur (10) selon l'une des revendications précédentes,
dans lequel la vitesse de mouvement de l'unité de déviation (12), le pas de trame des rayons de balayage (26, 28) et le temps de répétition de mesures entre deux mesures individuelles d'un rayon de balayage (26, 28) sont adaptés les uns aux autres de telle sorte que l'unité de déviation (12) continue à se déplacer d'un multiple du pas de trame entre deux mesures individuelles.

10. Capteur (10) selon l'une des revendications précédentes,
dans lequel un temps de trame angulaire est le temps qui s'écoule jusqu'à ce qu'un rayon de balayage (26, 28), dû au mouvement de l'unité de déviation (12), atteigne l'emplacement du rayon de balayage adjacent (26, 28) dans la direction du mouvement de l'unité de déviation (12), et le temps de répétition de mesures entre deux mesures individuelles d'un rayon de balayage (26, 28) est égal au temps de trame angulaire.

11. Capteur (10) selon l'une des revendications 1 à 9,
dans lequel un temps de trame angulaire est le temps qui s'écoule jusqu'à ce qu'un rayon de balayage (26, 28), dû au mouvement de l'unité de déviation (12), atteigne l'emplacement du rayon de balayage adjacent (26, 28) dans la direction du mouvement de l'unité de déviation (12), et le temps de répétition de mesures entre deux mesures individuelles d'un rayon de balayage (26, 28) est un multiple du temps de trame angulaire.

12. Capteur (10) selon l'une des revendications 1 à 9,
dans lequel un temps de trame angulaire est le temps qui s'écoule jusqu'à ce qu'un rayon de balayage (26, 28), dû au mouvement de l'unité de déviation (12), atteigne l'emplacement du rayon de balayage adjacent (26, 28) dans la direction du mouvement de l'unité de déviation (12), et le temps de répétition de mesures entre deux mesures individuelles d'un rayon de balayage (26, 28) et le temps de trame angulaire sont dans un rapport non entier, et/ou le temps de répétition de mesures n'est pas constant.

13. Capteur (10) selon l'une des revendications précédentes,
dans lequel l'unité de commande et d'évaluation (40) est réalisée pour effectuer une pré-mesure, destinée au réglage des paramètres de mesure d'autres rayons de balayage (26, 28), avec au moins un rayon de balayage (26, 28) en avant, en particulier avec le premier rayon de balayage (26, 28) dans la direction du mouvement de l'unité de déviation (12) à l'intérieur d'un plan de balayage.

14. Capteur (10) selon la revendication 13,
dans lequel la source de lumière (22a) pour le rayon de balayage (26, 28) en avant est désactivée afin de déterminer ainsi la part isolée de lumière parasite.

15. Procédé de détection d'objets dans une zone à surveiller (20),
dans lequel une lumière d'émission (26) est émise, la lumière d'émission (26) est périodiquement déviée, et la lumière d'émission (28) réémise par des objets dans la zone à surveiller (20) est reçue, la lumière d'émission (26) forme plusieurs rayons de balayage (26, 28) séparés les uns des autres et/ou la lumière d'émission réémise (28) est reçue sous forme de plusieurs rayons de balayage (26, 28) séparés les uns des autres, les rayons de balayage séparés étant entendus comme faisceaux lumineux séparés les uns des autres, et des mesures individuelles sont effectuées avec un rayon de balayage respectif (26, 28), et plusieurs mesures individuelles sont prises en compte afin de calculer une valeur de mesure commune pour la distance à l'objet, l'unité de déviation continue à se déplacer entre les mesures individuelles qui contribuent à une valeur de mesure commune,
caractérisé en que
des mesures individuelles d'au moins deux rayons de balayage différents (26, 28) sont prises en compte afin de calculer une valeur de mesure commune.
